# EUROPEAN PATENT APPLICATION

(11) **EP 2 767 426 A2**
(43) Date of publication of application: **20.08.2014**
(21) Application number: 14155093.9
(22) Date of filing: 13.02.2014
(51) Int. Cl.: B60J 11/06, B60J 11/08

(54) **Protective covering for caravan**

(30) Priority: 14.02.2013 GB 201302618
(71) Applicant: Specialised Covers, Shipley, West Yorkshire BD17 7AD (GB)
(72) Inventor: Long, Elliot, North Yorkshire LS17 0AN (GB)
(74) Representative: Coombes, Catherine Ann

(57) **Abstract**

The present invention provides a fitted tow protector for a caravan, wherein at least a portion of one or more sides of the tow protector (1) comprises a stretchable material (2) and a caravan comprising said tow protector.

## Description

### FIELD OF THE INVENTION

The present invention relates to a fitted tow protector for a caravan and a caravan comprising said fitted tow protector.

### BACKGROUND

Debris (e.g. small stones, insects, dirt and exhaust fumes and the like) contacting a caravan whilst it is being towed can have deleterious effects on a caravan. The costs of replacing cracked windows or stone chips on a caravan are quite expensive. Furthermore, aluminium caravans are easily dented and dents can reduce the resale value. Dirt and other debris can also affect the aesthetic appeal of the caravan.

For these and other reasons, it is desirable to protect a caravan from debris whilst it is being towed.

Tailored one-piece tow protectors designed to adhere to the contours of the front side of a caravan during towing are known. However, such tailor made tow protectors are often difficult to put on and take off a caravan due to their flush fit designed to prevent billowing during towing.

Accordingly, there exists a need for fitted tow protectors which are designed to fit particular makes or models of caravan that are easier to put on and take off a caravan without adversely affecting the fit and/or aesthetics of the fitted tow protector in use.

### SUMMARY OF THE INVENTION

The present invention relates to a fitted tow protector for a caravan, wherein at least a portion of one or more sides of the tow protector comprises a stretchable material. Suitably, the stretchable material may be situated at one or more sides (i.e. one side or both sides) of the main body of the tow protector.

Suitably, the stretchable material may be of a size such that it only constitutes a minor percentage of the width of the two protector e.g., such that the front side is substantially wholly covered by a different material. For example, the stretchable material may only be approximately 20% or less of the width of the tow protector or less than 18% or less than 16% or less than 15% or less than 12% of less than 10% or less than 5% the width of the tow protector.

Suitably, the stretchable material may be water repellent or water resistant. In one preferable aspect, the stretchable material may be waterproof and breathable fabric with a water repellent coating such as 100% polyester knitted material e.g., with moisture vapour permeable membrane in the middle.

Suitably, the tow protector may have one or more transparent sealed windows which correspond to the positioning of a caravan light(s) in use. For example, the tow protector may comprise two windows.

Suitably, the tow protector may comprise one or more elsticated clips usable to secure the tow protector to the valence of the caravan. Suitably, the tow protector may comprising a plurality of such elasticised straps, such as two or more; or three or more; or four or more; or five or more; or six or more; or seven or more.

Suitably, the tow protector may comprise one or more clip covers to hide one or more elasticised clips. Suitably, the tow protector may comprise a clip cover for each clip used.

Suitably, the tow protector may comprise one or more closeable apertures within the main body of the tow protector. Suitably, the fastening means for the closable apertures may take any conventional form in including Velcro or zips. Suitably, where zips are used the tow protector may have fabric which protects the zip coming into contact with the caravan in use and/or one or more zip locks to hold the zip puller in place during transit of the caravan.

Suitably, at least one of the closable apertures may correspond to the locker box access of the caravan. Thus, advantageously providing access to the locker box without the need to remove the tow protector.

Additionally or alternatively, at least one of the closable apertures corresponds to a grab handle of the caravan, thereby providing access to manoeuvre a caravan with the tow protector on.

Additionally or alternatively, at least one of the closable apertures corresponds to a window in the caravan.

Thus, the tow protector of the present invention may provide closeable apertures for access to window(s), a locker access box, grab handle(s) and any combination thereof.

Suitably, the tow protector may comprise accessories. For example, the tow protector may comprise a strip or band of elastic material which may attach to hold the two sides of a cloeasable aperture (e.g. window aperture) together when the closeable aperture is open. Alternatively or additionally, the tow protector may comprise one or more strips of Velcro. Such strips may be used to hold the material of a closeable aperture in a set position when the closeable aperture is open.

Suitably, where the caravan to which the tow protector of the present invention is to be fitted has one or more awning channels, the tow protector comprises may comprise awning tape at one or more side edges of the tow protector to communicate with the awning channel(s) of the caravan.

Suitably, where the caravan to which the tow protector of the present invention is to be fitted has one awning channel, the tow protector may comprise suckers on the side edge which does not communicate with an awning channel.

Suitably, the tow protector of the present invention may have one or more zips which extend the length of tow protector. Suitably, the tow protector may have a zip which extends the length of the tow protector situated on one or each side of the tow protector (e.g. within the vicinity of the one or more side edges). Suitably, the one or more zips close or open ended. Advantageously, this may aid assembly of the tow protector onto the caravan.

Suitably, the main body of the tow protector is comprises one or more layer(s) comprising one or more of the following materials: PVC; foam; Velcrotex material; non woven propylene; fleece or combinations thereof.

Suitably, the tow protector may have one or more webbing straps attached to either or both top corners to enable better fitting and fastening. The presence of such one or more webbing straps may prevent the cover from slipping down the awning channels.

Suitably, the tow protector may be provided with awning stoppers. Such awning stoppers may prevent the tow protector from slipping down the awning channels.

Suitably, the tow protector may comprises a strap and fastening system to affix the tow protector about the A frame of the caravan.

Suitably, the tow protector may comprise one or more reflective strips.

Suitably, the tow protector may comprise one or more LED lights. Suitably, the main body of the tow protector may comprise pockets (e.g. two pockets) to house lights; and/or means for forming one or more apertures in the tow protector (for example at positions corresponding to lights on the caravan when the tow protector is erected on a caravan).

In one alternative aspect, the tow protector of the present invention may not have one or more sides of a stretchable material and instead have one or more zips which extend the length of tow protector. Suitably, the tow protector may have a zip which extends the length of the tow protector situated on one or each side of the tow protector (e.g. within the vicinity of the one or more side edges). Advantageously, this may aid assembly of the tow protector onto the caravan.

In another aspect, the present invention provides a caravan comprising a tow protector in accordance with the present invention.

### BRIEF DESCRIPTION OF THE DRAWINGS

**Figure 1** is a one embodiment of a tow protector in accordance with the present invention.
**Figure 2** is another embodiment of a tow protector in accordance with the present invention.
**Figure 3** is a further embodiment of a tow protector in accordance with the present invention.
**Figure 4** is a further embodiment of a tow protector in accordance with the present invention.

### DESCRIPTION

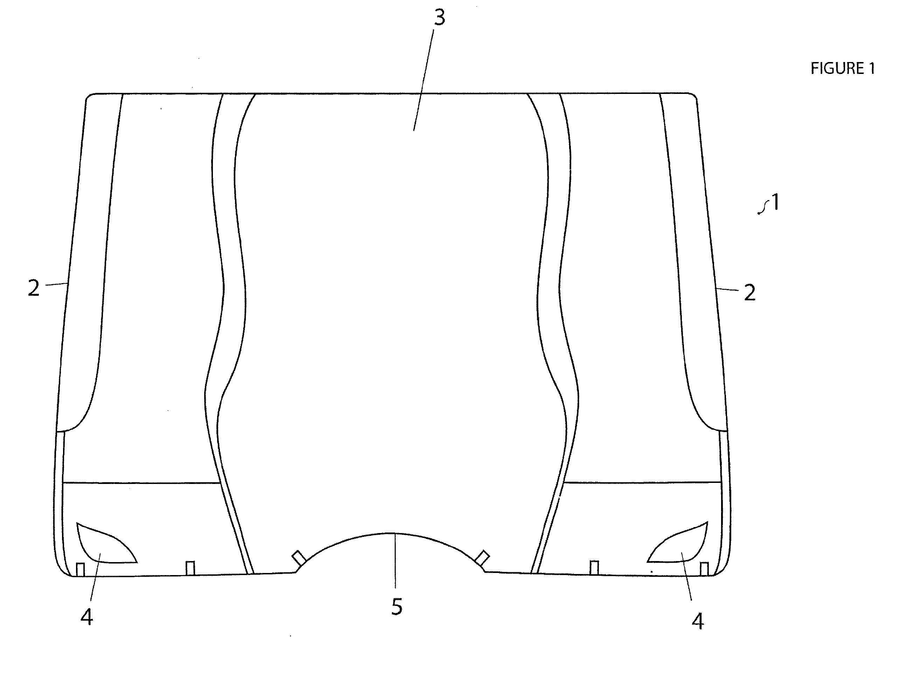

**FIG.** 1 is shows an embodiment of a tow protector of the present invention. The tow protector **1** comprises stretchable material **2** on either side of the main body 3 of the tow protector **1.** The stretchable material advantageously provides flexibility which aids the fixing of the tow protector to the caravan whilst holding the tow protector under tension in use, thereby inhibiting billowing in use. Whilst the stretchable material is shown on both sides in this embodiment, for the avoidance of doubt tow protectors of the present invention may comprise stretchable material at one side only, though both sides are preferable.

Suitably, the stretchable material may be of a size such that it only constitutes a minor percentage of the width of the two protector e.g., such that the front side is substantially wholly covered by a different material (e.g. the material of the main body **3)** as shown in Figure 1.

The stretchable material shown in **Figure 1** is a and breathable fabric with a water repellent coating, specifically 100% polyester knitted material with a moisture vapour permeable membrane.

The tow protector of **Figure 1** comprises one or more transparent sealed windows **4** which correspond to the positioning of a caravan light(s) in use. The tow protector **1** is tailored to fit the caravan and may be fitted tightly about the A-frame **5** thereof. In this specific embodiment, the main body is a four layer material comprising a non woven polypropylene layer (i.e. a waterproof & breathable material); a moisture vapour permeable membrane layer in the middle; a glue layer and a fleece lining layer, thermally bonded. However, it will be appreciated that other materials may be used.

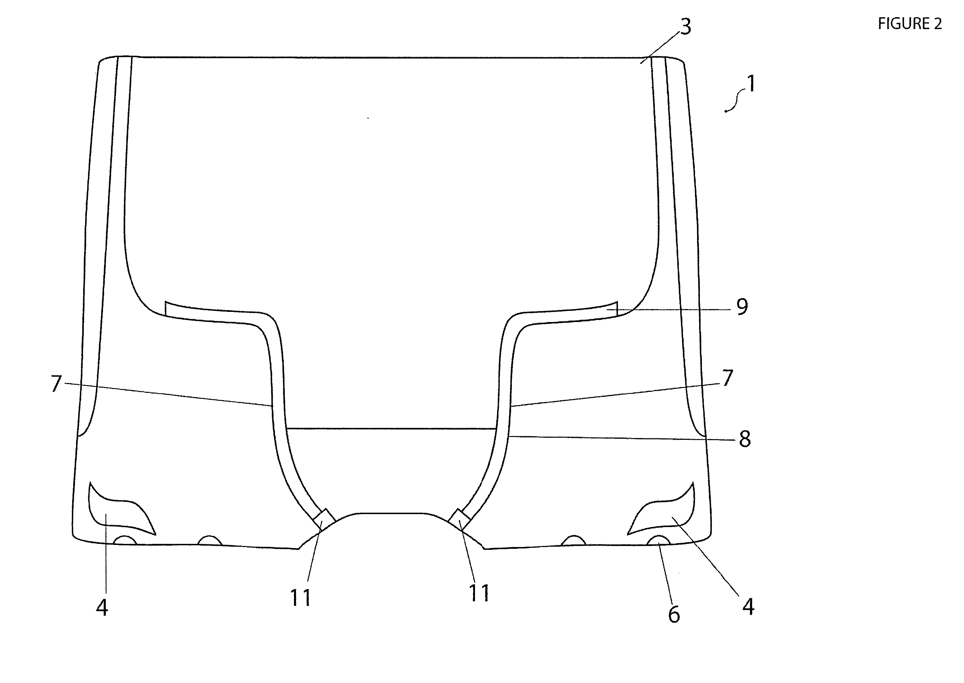

**Figure 2** shows a different tow protector in accordance with the present invention. In addition to the features of the tow protector of Figure 1 this tow protector **1** has a closeable aperture provided by zips 7. This provides access to the grab handles (not visible positioning of one grab handle shown by **9)** and locker access box (not visible - positioning shown by **8).** The zips have zip locks **11** to maintain the zips in a closed position when desired to prevent billowing.

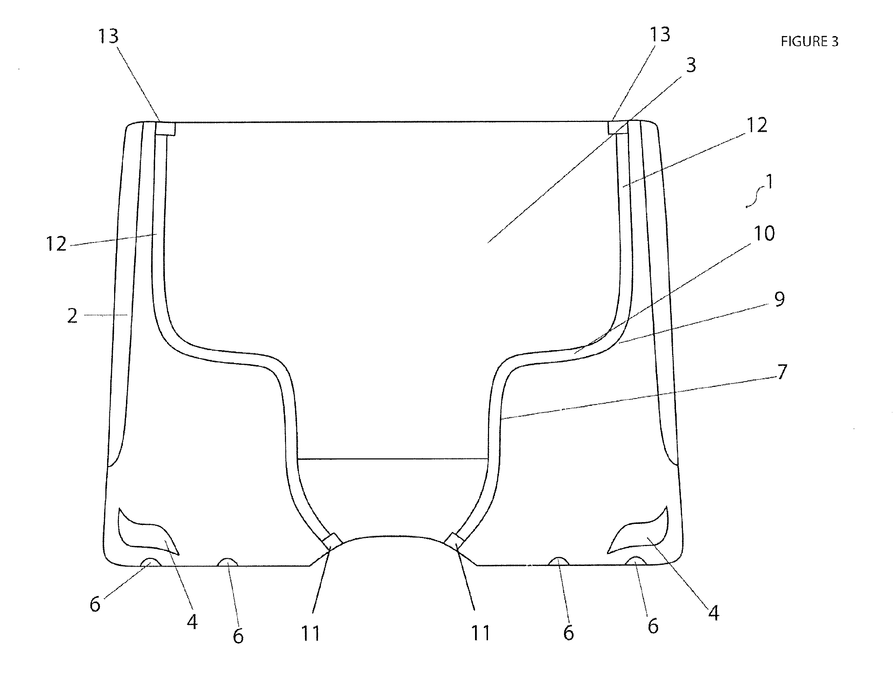

**Figure 3** shows a different tow protector in accordance with the present invention. In addition to the features of the tow protector of Figure 2 this tow protector **1** has an additional closeable aperture provided by zips **12.** This provides access to the window of the caravan (not visible positioning of one grab handle shown by **10).** The zips **12** have zip locks **13** to maintain the zips in a closed position when desired to prevent billowing. Fastening means may be provided to hold the apertures defined by the zips **7, 11** in an open position. The main body 3 of this embodiment further differs from the main body of Figures 1 and 2 in that it is a 3 layer bonded material comprising a PVC outer layer which is waterproof & UV stable; a middle layer (e.g. 8mm thick) of foam sponge padding and an innermost layer of Velcrotex material (i.e. a soft non scratch inner lining which bonds to male Velcro).

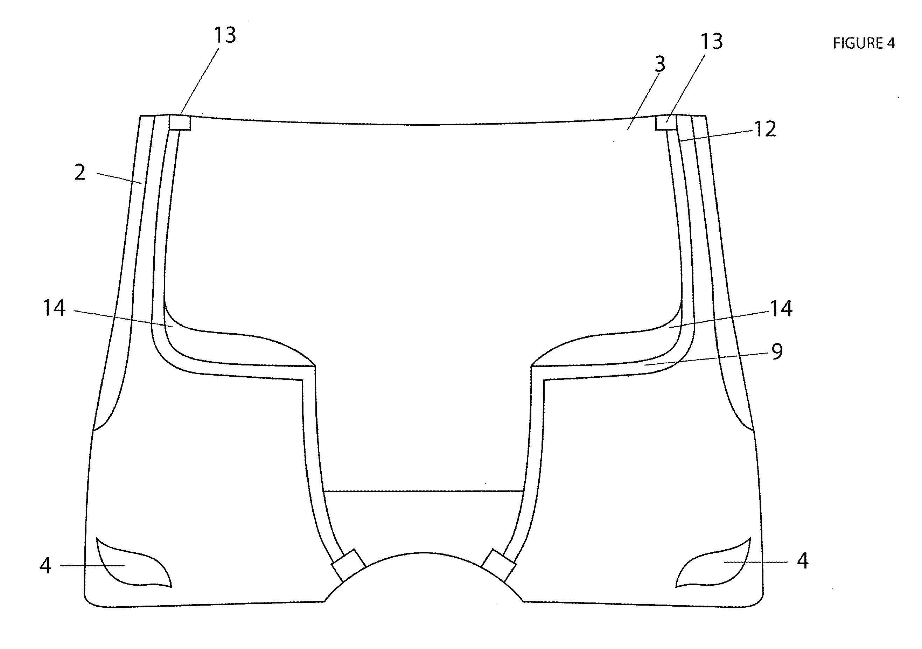

**Figure 4** is similar to the tow protector of figure 3 and is comprised of the same materials. Additionally. The tow protector comprises one or more transparent sealed windows **14.**

Suitably, any tow protector in accordance with the present invention may comprise one or more elsticated clips (not shown) usable to secure the tow protector to the valence of the caravan.

Suitably, at least a portion (preferably all) of the underside (not shown) of the main body of any tow-protector of the present invention may has a surface comprising a non scratch material (e.g. fleece or Velcrotex). Advantageously, this may also increase the protective thickness of the tow protector in addition to providing a non-scratch surface.

Suitably, at least a portion (preferably all) of the outer side of any tow-protector of the present invention may have a surface comprising a water repellent or water resistant material. However, any configuration where the tow protector prevents water seeping through to the surface area of the caravan protected by the tow protector is encompassed. For example, the water repellent or water resistant material or materials may form one layer not necessarily the outermost layer.

Suitably, any tow protector in accordance with the present invention may additionally comprise further straps which may attach the tow protector to fixing points on the underside of the caravan for added security in fixing.

## Claims

1. A fitted tow protector for a caravan, wherein at least a portion of one or more sides of the tow protector comprises a stretchable material.

2. The fitted tow protector of claim 1, wherein the stretchable material is of a size such that it mainly covers only the sides of the caravan between the front side and the awning channel such that the front side is substantially wholly covered by a different material.

3. The fitted tow protector of claim 1 or claim 2 wherein the stretchable material is water repellent or water resistant.

4. The fitted tow protector according to any one of claims 1 to 3 wherein the stretchable material is a breathable fabric with a water repellent coating.

5. The fitted tow protector according to any one of the preceding claims wherein the tow protector has one or more transparent sealed windows which correspond to the positioning of a caravan light in use and/or has one or more elsticated straps usable to secure the tow protector to the valence of the caravan.

6. The tow protector of any one of the preceding claims wherein the two protector comprises one or more closeable apertures within the main body of the tow protector.

7. The tow protector of claim 6 wherein at least one of the closable apertures corresponds to the locker box access of the caravan.

8. The tow protector of claim 6 or claim 7 wherein at least one of the closable apertures corresponds to a grab handle of the caravan.

9. The tow protector of any one of claims 6 to 8 wherein at least one of the closable apertures corresponds to a window in the caravan.

10. The tow protector according to any one of the preceding claims wherein the tow protector comprises awning tape at one or more side edges of the tow protector to communicate with the awning channel or channels of the caravan.

11. The tow protector of any one of the preceding claims wherein the main body of the tow protector is comprises one or more layer(s) comprising one or more of the following materials: PVC; foam; Velcrotex material; non woven propylene; fleece or combinations thereof.

12. The tow protector of any one of the preceding claims wherein the tow protector comprises a strap and fastening system to affix the tow protector about the A frame of the caravan.

13. The tow protector of any one of the preceding claims wherein the tow protector comprises one or more zips which extend the length of tow protector.

14. The tow protector of claim 1 as substantially herein described.

15. A caravan comprising a tow protector in accordance with any one of claims 1 to 14.
